**Europäisches Patentamt**

**European Patent Office**

**Office européen des brevets**

(19)

(11) Veröffentlichungsnummer : **0 400 362 B1**

(12)

# EUROPÄISCHE PATENTSCHRIFT

(45) Veröffentlichungstag der Patentschrift :
**29.11.95 Patentblatt 95/48**

(51) Int. Cl.⁶ : **H04L 9/08**

(21) Anmeldenummer : **90108665.2**

(22) Anmeldetag : **08.05.90**

(54) **Verfahren zur hierarchischen Schlüsselverwaltung mit Teilschlüsseln zur Übermittlung digitalisierter Information.**

(30) Priorität : **31.05.89 DE 3917711**

(43) Veröffentlichungstag der Anmeldung :
**05.12.90 Patentblatt 90/49**

(45) Bekanntmachung des Hinweises auf die
Patenterteilung :
**29.11.95 Patentblatt 95/48**

(84) Benannte Vertragsstaaten :
**BE DE DK ES FR GB GR IT LU NL**

(56) Entgegenhaltungen :
**EP-A- 0 281 224**

(56) Entgegenhaltungen :
**PROCEEDINGS OF THE 1986 IEEE SYMPO-
SIUM ON SECURITY AND PRIVACY, 7-9 April
1986, pages 138 147, Washington DC, US;
W.P.LU and M.K. SUNDARESHAN: "A Hierarchical Key Management Scheme For End-
to-End Encryption In Internet Environments"**

(73) Patentinhaber : **SIEMENS
AKTIENGESELLSCHAFT
Wittelsbacherplatz 2
D-80333 München (DE)**

(72) Erfinder : **Leclerc, Matthias, Dr.
Theresienstrasse 140
D-8000 München 2 (DE)**

EP 0 400 362 B1

**Beschreibung**

Die Übermittlung digitalisierter Informationen über Kommunikationsnetze erfordert oftmals die Gewährleistung der Geheimhaltung bzw. einen Beweis der Authentizität der Nachricht. Die hierzu verwendeten Mechanismen basieren im allgemeinen auf symmetrischen Verschlüsselungsverfahren, bei denen Sender und Empfänger mit demselben Schlüssel verschlüsseln und entschlüsseln. Aus Sicherheitsgründen sollte jede Nachricht mit einem eigenen Schlüssel versehen werden. Das wirft das Problem auf, Sender und Empfänger mit den entsprechenden Schlüsseln zu versorgen.

Aus Proceedings of the 1986 IEEE Symposium On Security And Privacy, 07. - 09. April 1986, Oakland, California, Seiten 138 bis 147 ergibt sich ein hierarchisches Schlüsselverwaltungsverfahren, bei dem die zu übertragenden Informationen mit einem Sitzungsschlüssel verschlüsselt werden. Eine Sendeeinheit erzeugt diesen Sitzungsschlüssel und überträgt ihn verschlüsselt mit einem auch der Empfangseinheit bekannten Austauschschlüssel. Die Empfangseinheit entschlüsselt den Sitzungsschlüssel und verschlüsselt ihn mit einem dem Empfangsterminal bekannten Hauptschlüssel und überträgt den verschlüsselten Sitzungsschlüssel an das Empfangsterminal. Ein Nachteil dieses Verfahrens besteht darin, daß eine Empfangseinheit mit einer Vielzahl von Terminals verbunden sein kann und damit eine Vielzahl von Terminalschlüssel speichern muß.

Das der Erfindung zugrundeliegende Problem besteht darin, ein Verfahren anzugeben, bei dem mehrere verschiedene Schlüssel zur Sicherstellung der Geheimhaltung bzw. zum Beweis der Authentifizierung verwendet werden und bei dem, obwohl mit einer Zentrale eine Vielzahl von Terminals bedient werden können, der Speicherbedarf für die Schlüsselverwaltung trotzdem nicht zu groß wird.

Diese Aufgabe wird gemäß den Merkmalen des Patentanspruchs 1 gelöst.

Im folgenden wird die vorliegende Erfindung anhand mehrerer Figuren im einzelnen beschrieben.

Fig. 1     zeigt in Form eines Blockschaltbildes einen sog. Sicherheitsmodul zur Durchführung des erfindungsgemäßen Verfahrens.

Fig. 2     zeigt ein Blockschaltbild entsprechend demjenigen gemäß Fig. 1, in das schematisch verschiedene Funktionsangaben S, S, T eingetragen sind.

Fig. 3     zeigt ein Blockschaltbild entsprechend demjenigen gemäß Fig. 1, in das schematisch die Funktion eines sog. Austauschschlüssels $T^{ij}$ eingetragen ist.

Fig. 4     zeigt ein Blockschaltbild entsprechend demjenigen gemäß Fig. 1, das schematisch die Vorgänge bei einer sog. Umverschlüsselung eines Sitzungsschlüssels verdeutlicht.

Das erfindungsgemäße Verfahren unterscheidet zwischen sog. Sitzungsschlüsseln, sog. Terminalschlüsseln und sog. Austauschschlüsseln. Die Sitzungsschlüssel dienen der Verschlüsselung der während einer Verbindung gesendeten Information. Sie werden hierzu von einer Zentrale erzeugt, an die beteiligten Terminals gesendet und nach Gebrauch gelöscht.

Zur Übertragung der Sitzungsschlüssel von der Zentrale zu den Terminals werden die Sitzungsschlüssel unter den Terminalschlüsseln der Empfängerterminals verschlüsselt.

Die Kommunikation zwischen zwei Zentralen wird durch einen Austauschschlüssel verschlüsselt.

Die Terminals haben nur ihren eigenen Terminalschlüssel in einem zugriffssicheren Sicherheitsmodul abgespeichert. Die Zentrale hingegen muß alle Terminalschlüssel abspeichern. Dies erfordert einen hohen Speicherplatzbedarf: Bei beispielsweise 100 000 Terminals und Verschlüsselung mit der sog. DES-Technik ergibt sich (der log-Term bezieht sich auf die Adreßinformation): $100\,000 \times 56$ Bit $\times \log_2(100\,000)$ Bit $= 7{,}3$ MBit. Das System gemäß der vorliegenden Erfindung umgeht dieses Problem dadurch, daß die Terminalschlüssel on-line statt off-line erzeugt werden.

Zur Notation ist folgendes auszuführen:

Die Verschlüsselung einer Nachricht m unter dem Schlüssel S wird durch E(S;m) bezeichnet. Eine Einwegfunktion ist eine Abbildung, für die es rechentechnisch unmöglich ist, das Urbild eines Funktionswerts zu ermitteln.

Terminalschlüssel aus Teilschlüsseln

Jedem Terminal wird eine Identifikation $A \in [0...N-1]$ zugeordnet, die als

$$A = a_0 + a_1 b + a_2 b^2 + ... + a_{k-1} b^{k-1}$$

repräsentiert werden kann (für eine beliebige natürliche Zahl $b \geq 2$). Hierdurch wird ein Adreßvektor

$$(a_0, a_1, a_2, ..., a_{k-1})$$

von Terminal A eindeutig bestimmt. Weiter sei

$$K_0(0), K_0(1), ... , K_0(b-1)$$
$$K_1(0), K_1(1), ... , K_1(b-1)$$
$$.....$$

$$K_{k-1}(0), K_{k-1}(1), \ldots, K_{k-1}(b-1)$$

ein Feld von bxk (geheimen) Teilschlüsseln. Unter Benutzung der Adresse $(a_0, a_1, a_2, \ldots, a_{k-1})$ wird der Terminalschlüssel T des betreffenden Terminals durch

$$T: = f(K_0(a_0) \oplus K_1(a_1) \oplus \ldots \oplus K_{k-1}(a_{k-1}))$$

berechnet (f bezeichnet eine Einwegfunktion und "$\oplus$" die bitweise Addition). Die Einwegfunktion verhindert, daß T durch Lösung von b x k linearen Gleichungen ermittelt werden kann.

Die einzelnen Terminalschlüssel werden bei den jeweiligen Terminals fest installiert. In der Zentrale muß nur das Teilschlüsselfeld gespeichert werden. Es bezeichne L die Länge eines Teilschlüssels. Die Speicherung des Feldes benötigt einen Speicherplatz von

$$bxkxL = bxlog_b NxL \cong 3xlog_3 NxL$$

Bits.

## Schlüsselverwaltung

Das System baut auf drei im Sicherheitsmodul der Zentrale installierten Funktionen auf.

## Sicherheitsmodul

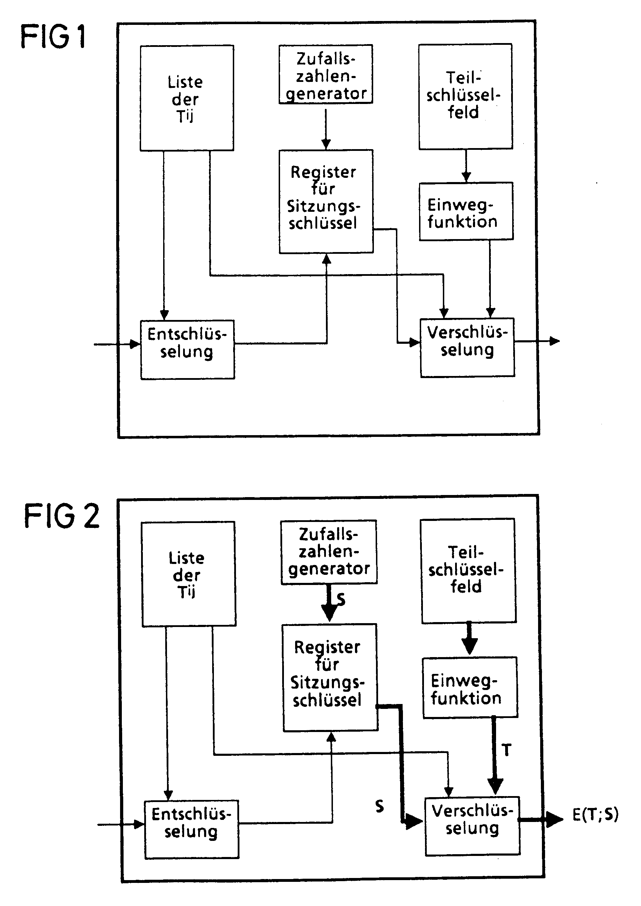

Das Sicherheitsmodul ist ein physikalisch geschützter Bereich, in dem untergebracht sind:
- Register für Teil-, Sitzungs- und Austauschschlüssel,
- Ver- und Entschlüsselungseinheiten,
- ein Zufallsgenerator und
- die Hardware-Implementierung einer Einwegfunktion, vgl. Fig. 1.

Sowohl der Zufallsgenerator als auch die Einwegfunktion werden durch die Verschlüsselungsfunktion realisiert. Im ersten Fall wird zur Erzeugung einer Zufallszahl r die aktuelle Zeit t als Eingabe genommen und unter einem festen geheimen Schlüssel K verschlüsselt: $r: = E(K;t)$. Eine Einwegfunktion $f(x)$ wird durch Verschlüsselung einer Konstanten (etwa 0) unter dem als Schlüssel X interpretierten Argument x definiert: $f(x): = E(X;0)$.

Datenbusse führen als Ein- und Ausgabekanäle nach außen.

## Umverschlüsselung eines Sitzungsschlüssels unter einem Terminalschlüssel

Im Zufallszahlengenerator wird ein Sitzungsschlüssel erzeugt, der im Register für Sitzungsschlüssel abgelegt wird.

Wie zuvor unter "Terminalschlüssel aus Teilschlüsseln" beschrieben, wird der Terminalschlüssel aus den jeweiligen Teilschlüsseln mit Hilfe der Einwegfunktion f berechnet. Durch die Angabe des Adreßvektors als Identifikation kann der Zugriff des Mikroprogramms auf die einzelnen Teilschlüssel in effizienter Weise gesteuert werden.

In der Verschlüsselungseinheit wird $E(T;S)$ berechnet, vgl. Fig. 2.

## Umverschlüsselung eines Sitzungsschlüssels unter Austauschschlüssel

Der vertrauliche Datenfluß zwischen zwei Zentralen i und j wird durch Austauschschlüssel $T^{ij}$ verschlüsselt. Diese Schlüssel sind wie Terminalschlüssel permanent installiert.

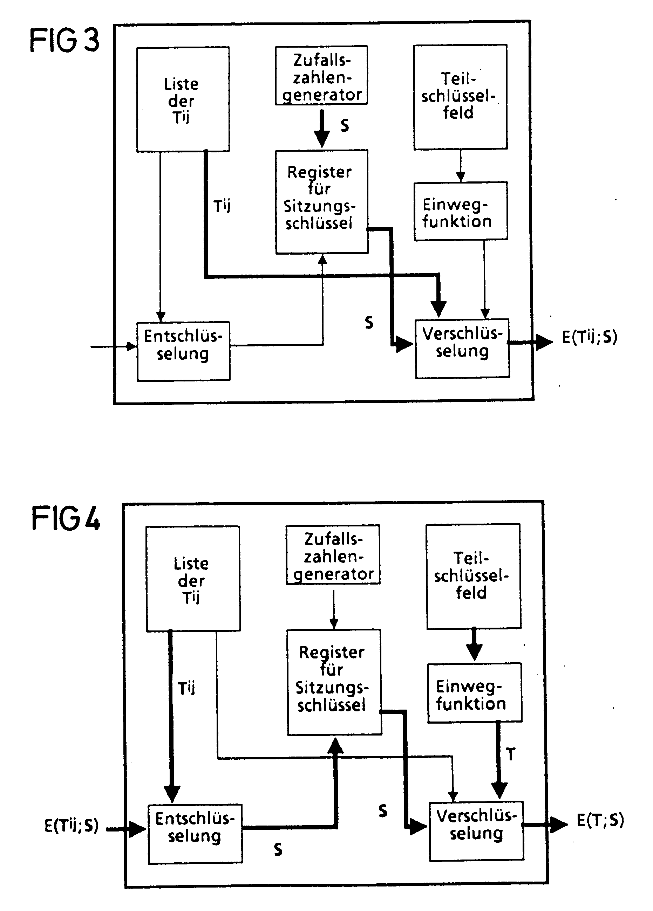

Als Beispiel sei angenommen, daß ein von der Zentrale i versorgtes Terminal mit einem von der Zentrale j versorgten Terminal kommunizieren will. Die Zentrale i erzeugt den erforderlichen Sitzungsschlüssel S und verschlüsselt ihn unter dem Austauschschlüssel $T^{ij}$, vgl. Fig. 3.

## Umverschlüsselung eines Sitzungsschlüssels

Die Zentrale j erhält von der Zentrale i den verschlüsselten Sitzungsschlüssel $E(T^{ij};S)$. Zur Aussendung an das Empfängerterminal wird S unter dessen Terminalschlüssel umverschlüsselt. Hierzu wird zunächst $E(T^{ij};S)$ entschlüsselt und S in das Register der Sitzungsschlüssel geladen. Der Terminalschlüssel T wird wie beschrieben erzeugt und S unter T verschlüsselt, vgl. Fig. 4.

## Terminalverschlüsselung

Die Terminals besitzen ihre Terminalschlüssel nur in geschlossener Form. Sie sind nur in der Lage, die Ver- und Entschlüsselungsfunktion unter einem Sitzungsschlüssel oder ihrem Terminalschlüssel auszuführen.

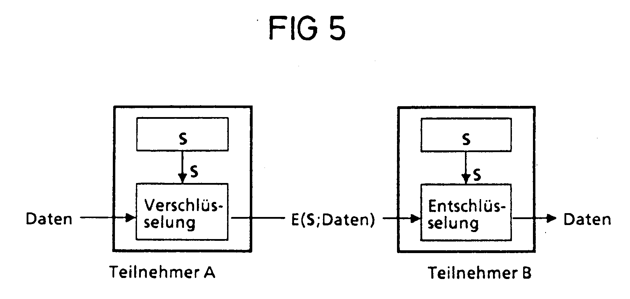

Fig. 5 stellt exemplarisch die Kommunikationsverschlüsselung dar.

**Patentansprüche**

1. Verfahren zur hierarchischen Schlüsselverwaltung im Rahmen der Übermittlung oigitalisierter Informationen,
   - bei dem die Informationen zwischen am Netz angeschlossenen Sende- Empfangszentralen übertragen werden, die jeweils mit Terminals verbunden sind,
   - bei dem zur Verschlüsselung der während eines Übertragungsvorganges gesendeten Information ein von der Sende- Zentrale erzeugter Sitzungsschlüssel verwendet wird,
   - bei dem der Sitzungsschlüssel mit einem bei den Zentralen vorhandenen Austauschschlüssel verschlüsselt wird und der verschlüsselte Sitzungsschlüssel zur Empfangszentrale übersendet wird,
   - bei dem die Empfangszentrale den verschlüsselten Sitzungsschlüssel entschlüsselt,
   - bei dem die Empfangszentrale den Sitzungsschlüssel mit einem im empfancenden Terminal vorhandenen Terminalschlüssel verschlüsselt und den verschlüsselten Terminalschlüssel an das empfangene Terminal sendet,
   - bei dem der einem Terminal zugeordnete Terminalschlüssel in der Zentrale mit Hilfe einer Einwegfunktion aus einem dem Terminal zugeordneten Adressenvektor und in der Zentrale gespeicherten Teilschlüsseln erzeugt wird.

2. Verfahren nach Anspruch 1,
   **dadurch gekennzeichnet**,
   daß die Terminals jeweils nur ihren eigenen Terminalschlüssel in einem sog. zugriffssicheren Sicherheitsmodul abgespeichert enthalten.

**Claims**

1. Method for hierarchical key management within the framework of the transmission of digitized information,
   - in which the information is transmitted between transmitting and receiving to the network and, control centres which are connected in each case, to terminals
   - in which a session key generated by the transmitting control centre is used to encode the information transmitted during a transmission operation,
   - in which the session key is encoded by means of an exchange key present in the control centres and the encoded session key is transmitted to the receiving control centre,
   - in which the receiving control centre decodes the encoded session key,
   - in which the receiving control centre encodes the session key by means of a terminal key present in the receiving terminal and transmits the encoded terminal key to the receiving terminal, and
   - in which the terminal key, assigned to a terminal, in the control centre is generated with the aid of a one-way function from an address vector assigned to the terminal and from subkeys stored in the control centre.

2. Method according to Claim 1, characterized in that the terminals each contain only their own terminal key stored in a so-called access-secure security module.

**Revendications**

1. Procédé de gestion hiérarchique de clés dans la transmission d'informations numérisées,
   - selon lequel on transmet les informations entre des centraux d'émission-réception raccordés au réseau et reliés chacun à des terminaux,
   - selon lequel, pour le chiffrement de l'information émise pendant un processus de transmission, on utilise une clé de session produite par le central d'émission,
   - selon lequel on chiffre la clé de session par une clé de permutation présente dans les centraux et on retransmet le code de session chiffré au central de réception,
   - selon lequel le central de réception déchiffre la clé de session chiffrée,
   - selon lequel le central de réception chiffre la clé de session par une clé de terminal présente dans le terminal de réception et envoie la clé chiffrée du terminal au terminal de réception, et

- selon lequel on produit la clé de terminal, associée à un terminal, dans le central à l'aide d'une fonction unidirectionnelle à partir d'un vecteur d'adresse associé au terminal et de clés partielles mémorisées dans le central.

2. Procédé suivant la revendication 1, caractérisé par le fait que les terminaux ne contiennent chacun que leur clé propre à l'état mémorisé dans un module de sécurité dit à accès sûr.

**FIG 1**

```
┌──────────────────────────────────────────────────────┐
│                                                        │
│  ┌──────────┐   ┌──────────┐      ┌──────────┐        │
│  │  Liste   │   │ Zufalls- │      │  Teil-   │        │
│  │   der    │   │ zahlen-  │      │schlüssel-│        │
│  │   Tij    │   │generator │      │   feld   │        │
│  └──────────┘   └──────────┘      └──────────┘        │
│                       │                 │              │
│                       ▼                 ▼              │
│                 ┌──────────┐      ┌──────────┐         │
│                 │ Register │      │ Einweg-  │         │
│                 │   für    │      │ funktion │         │
│                 │Sitzungs- │      └──────────┘         │
│                 │schlüssel │           │               │
│                 └──────────┘           │               │
│                                        │               │
│       ┌──────────┐            ┌──────────┐             │
│  ───► │Entschlüs-│            │Verschlüs-│  ───►        │
│       │ selung   │            │ selung   │             │
│       └──────────┘            └──────────┘             │
│                                                        │
└──────────────────────────────────────────────────────┘
```

**FIG 2**

```
┌──────────────────────────────────────────────────────┐
│                                                        │
│  ┌──────────┐   ┌──────────┐      ┌──────────┐        │
│  │  Liste   │   │ Zufalls- │      │  Teil-   │        │
│  │   der    │   │ zahlen-  │      │schlüssel-│        │
│  │   Tij    │   │generator │      │   feld   │        │
│  └──────────┘   └──────────┘      └──────────┘        │
│                      │ S                │              │
│                      ▼                  ▼              │
│                 ┌──────────┐      ┌──────────┐         │
│                 │ Register │      │ Einweg-  │         │
│                 │   für    │      │ funktion │         │
│                 │Sitzungs- │      └──────────┘         │
│                 │schlüssel │           │ T             │
│                 └──────────┘           │               │
│                                  S                     │
│       ┌──────────┐            ┌──────────┐             │
│  ───► │Entschlüs-│            │Verschlüs-│  ───► E(T;S) │
│       │ selung   │            │ selung   │             │
│       └──────────┘            └──────────┘             │
│                                                        │
└──────────────────────────────────────────────────────┘
```

**FIG 3**

| Liste der Tij | Zufalls-zahlen-generator | Teil-schlüssel-feld |
|---|---|---|

S

| Register für Sitzungs-schlüssel | Einweg-funktion |
|---|---|

Tij

| Entschlüs-selung | S | Verschlüs-selung | → E(Tij;S) |
|---|---|---|---|

**FIG 4**

| Liste der Tij | Zufalls-zahlen-generator | Teil-schlüssel-feld |
|---|---|---|

| Register für Sitzungs-schlüssel | Einweg-funktion |
|---|---|

Tij

T

E(Tij;S) →

| Entschlüs-selung | S | Verschlüs-selung | → E(T;S) |
|---|---|---|---|

S

# FIG 5

Daten ⟶ Verschlüs-selung ⟶ E(S;Daten) ⟶ Entschlüs-selung ⟶ Daten

S → S

S → S

Teilnehmer A          Teilnehmer B